# EUROPÄISCHE PATENTANMELDUNG

(11) **EP 2 060 664 A1**
(43) Veröffentlichungstag der Anmeldung: **20.05.2009**
(21) Anmeldenummer: 08169300.4
(22) Anmeldetag: 17.11.2008
(51) Int. Cl.: D01B 1/10, D01B 1/50, B29B 15/12, B29B 15/14, D02G 3/02

(54) **Verfahren zur Herstellung eines mit Naturfasern verstärkten Kunststoffs**

(30) Priorität: 16.11.2007 DE 102007055103
(71) Anmelder: Transmare B.V., 3011 JG Rotterdam (NL)
(72) Erfinder: Mischok, Jürgen, 99974 Mühlhausen (DE)
(74) Vertreter: Storz, Ulrich

(57) **Zusammenfassung**

Gegenstand der Erfindung ist ein Verfahren zur Herstellung von Endlosfasern aus einem Bambusrohr, aufweisend die folgenden Schritte: a) Zerteilen des Bambusrohres quer zu seiner Längsachse in einzelne Abschnittselemente, b) Spalten der Abschnittselemente entlang ihrer Längsachse in Spaltelemente, c) Lagerung der Spaltelemente in einer Flüssigkeit, d) Zerfaserung der Spaltelemente zu einzelnen Filamenten mittels Druckbeaufschlagung, und e) Vertwisten oder Verzwirnen mehrerer einzelner Filamente zu Endlosfasern. Ferner betrifft die Erfindung ein Verfahren zur Herstellung eines faserverstärkten Kunststoffes mittels einer gemäß dem erfindungsgemäßen Verfahren hergestellten Endlosfaser aus einem Bambusrohr.

## Beschreibung

Die vorliegende Erfindung betrifft ein Verfahren zur Herstellung von Endlosfasern aus einem Bambusrohr sowie ein Verfahren zur Herstellung eines mit Endlosfasern verstärkten Kunststoffes.

### Stand der Technik

Faserverstärkte Kunststoffe kommen im Bereich der Technik in vielen Gebieten zum Einsatz. Sie weisen im Vergleich zu anderen Werkstoffen hohe spezifische Steifigkeiten und Festigkeiten bei geringem spezifischem Gewicht auf.

Diese an sich widersprüchlichen Eigenschaften verdanken diese Werkstoffe der Tatsache, dass sie aus wenigstens zwei Komponenten bestehen, nämlich einer Faserkomponente sowie einer Matrixkomponente. Die Fasern der Faserkomponente weisen in Längsrichtung ein hohes Elastizitätsmodul auf und sind daher in der Lage, starke Zugkräfte aufzunehmen. Die Matrixkomponente bettet und stützt die Fasern, schützt sie vor Knicken und anderen Umwelteinflüssen und weist überdies eine hohe Bruchfestigkeit auf, so dass sie in der Lage ist, starke Drücke und Schubkräfte aufzunehmen. Eine innige Verbindung zwischen Faser und Matrixkomponente trägt dazu bei, dass Zugkräfte, Drücke und Schubkräfte gleichmäßig auf den gesamten Werkstoff übertragen werden.

Bei der Faserkomponente handelt es sich in der Regel um Glas- oder Kohlefasern. Vereinzelt kommen auch Stahlfasern oder aber Fasern aus Aramid, Nylon oder Polyethylen zum Einsatz.

Bei der Matrixkomponente handelt es sich gewöhnlich um einen thermoplastischen, einen duroplastischen oder einen elastomeren Kunststoff. Letztere kommen nur vereinzelt zum Einsatz, zum Beispiel bei Keil- oder Zahnriemen. Erstere sind besonders vielseitig verwend- und verarbeitbar, während die als zweites genannten faserverstärkten Kunststoffe mit duroplastischer Matrix in der Regel die höchsten Festigkeiten aufweisen.

Faserverstärkte Kunststoffe haben sich in all den Einsatzbereichen, bei denen es auf eine hohe Zug- und Bruchfestigkeit bei geringem spezifischen Gewicht ankommt, durchgesetzt, so zum Beispiel im Karosseriebau, im Flugzeugbau, im Schiffbau, im Tief- und Hochbau sowie bei Artikeln des täglichen Lebensbedarfs.

Aufgrund der innigen Verbindung zwischen Faser- und Matrixkomponente, die für die oben genannten positiven Eigenschaften unverzichtbar ist, lassen sich faserverstärkte Kunststoffe in der Regel nur schlecht oder gar nicht wiederverwerten. So können zum Beispiel faserverstärkte Thermoplaste zwar eingeschmolzen werden, dies erleichtert die Auftrennung in die Matrix und die Faserkomponente jedoch nicht.

Eine chemische Extraktion der Fasern verbietet sich in der Regel aus Umwelt- sowie aus Kostengründen. Allenfalls lassen sich solche Kunststoffe zermahlen und als Streckmittel wiederverwenden. Letztere sind jedoch im Vergleich zu den Ausgangsstoffen von minderer Qualität. Faserverstärkte Thermoplaste können unter Umständen ebenfalls zermahlen und als kurzfaserverstärkte Kunststoffe wiederverwendet werden. Durch das erneute Aufschmelzen werden jedoch die Eigenschaften des thermoplastischen Kunststoffs wesentlich verschlechtert.

Die erwähnten, eingeschränkten Recyclingmöglichkeiten gelten allerdings nicht für glasfaserverstärkte Kunststoffe, die einen überwältigend großen Anteil der Gesamtmenge der faserverstärkten Kunststoffen darstellen, da sie die oben genannten Eigenschaften in Bezug auf Festigkeit und spezifisches Gewicht in nahezu idealer Weise verbinden. Überdies sind sie sehr kostengünstig in der Herstellung, insbesondere im Vergleich zu Kohlefaser- oder aramidfaserverstärkten Kunststoffen. Da Glasfasern nicht brennen, können glasfaserverstärkte Kunststoffe zu Zwecken der Entsorgung nicht oder nur schlecht verbrannt werden. Ebenso wenig können sie zermahlen werden, da die Glasfasern eine große Oberflächenhärte aufweisen, die die zu benutzenden Mahlwerkzeuge, insbesondere zum Beispiel Extruder, beschädigen würden. Außerdem werden beim Zermahlen von Glasfasern Mikrofasern freigesetzt, die stark gesundheitsschädlich sind.

Aus diesem Grunde dürfen nach deutscher Gesetzgebung glasfaserverstärkte Kunststoffe nicht wiederverwertet werden, sondern müssen endgelagert werden. Da aufgrund der Richtlinie 2000/53/EG des Europäischen Parlaments die EU-Mitgliedsstaaten verpflichtet sind, Maßnahmen zu treffen, um sicherzustellen, dass bis spätestens 01.01.2006 Altfahrzeuge zu mindestens 85% des durchschnittlichen Fahrzeugsgewichts wiederverwertet werden müssen, und bis spätestens 01.01.2015 zu mindestens 95% wiederverwertet werden, ist mittelfristig absehbar, dass glasfaserverstärkte Kunststoffe im Automobilbau nicht mehr in nennenswertem Umfang verwendet werden können.

Nach einer Studie des VDI ist der Gewichtsanteil von Kunststoffen im Automobilbau in den letzten 30 Jahren von 6 Gew.-% auf 15 Gew.-% angestiegen, während der Metallanteil um denselben Betrag zurückging. Grund hierfür ist, dass mehr und mehr metallische KFZ-Bauteile aus Gewichts- und Korrosionsgründen durch Kunststoffbauteile ersetzt werden. Ein Großteil dieser Kunststoffe sind glasfaserverstärkte Kunststoffe, deren Anteil in Zukunft aufgrund der genannten EU-Richtlinie mehr und mehr reduziert werden muss.

Es besteht also ganz offensichtlich ein dringender Bedarf für einen recyclefähigen Werkstoff, der insbesondere geeignet ist, glasfaserverstärkte Kunststoffe im Automobilbau zu ersetzen, und der ähnliche Eigenschaften in Bezug auf die Wirtschaftlichkeit, die Zug und Bruchfestigkeit sowie das spezifische Gewicht aufweist.

Aber auch für andere Einsatzbereiche ist ein solcher Werkstoff dringend erforderlich. Aus dem Stand der Technik sind faserverstärkte Kunststoffe bekannt, deren Faserkomponente aus nachwachsenden Verstärkungsfasern bestehen, so zum Beispiel aus Flachs, Hanf oder Sisal.

Diese werden in der Regel als Kurzschnitt beim Compoundieren zusammen mit dem Kunststoffrohmaterial coextrudiert. Dieses Vorgehen hat zwei gravierende Nachteile: Zunächst einmal weisen Naturfasern in der Regel eine sehr raue Oberfläche auf, was zu Verklumpungen beim Zudosieren im Extruder führt. Die genaue Zudosierung von Naturfasern als Kurzschnitt beim Compoundieren bereitet daher erhebliche Probleme.

Hinzu kommt, dass bei dieser Art der Zudosierung die Naturfasern durch die gesamte Extruderschnecke geführt werden. Dies führt zwar zu einer guten Durchmischung zwischen Fasern und Kunststoffmatrix, allerdings werden die Fasern auf dem Weg durch die Schnecke stark mechanisch strapaziert und zum Teil zerrissen.

### Offenbarung der Erfindung

Aufgabe der vorliegenden Erfindung ist es, ein Verfahren zur Herstellung von Endlosfasern aus einem Bambusrohr sowie ein Verfahren zur Herstellung eines mit Endlosfasern verstärkten Kunststoffes bereitzustellen, bei dem der verstärkte Kunststoff recyclebar ist, dabei höchste Ansprüche an das spezifische Gewicht und die Zug und Bruchfestigkeit erfüllt, und der daher auch für tragende Strukturen, zum Beispiel im Fahrzeugbau, im Flugzeugbau oder im Schiffbau verwendet werden kann.

Diese Aufgaben werden mit den Merkmalen der unabhängigen Ansprüche der vorliegenden Erfindung gelöst. Die Unteransprüche geben bevorzugte Ausführungsformen an. Dabei ist zu beachten, dass die genannten Bereichsangaben durchweg einschließlich der jeweiligen Grenzwerte zu verstehen sind.

Demnach ist ein Verfahren zur Herstellung einer Endlosfaser aus einem Bambusrohr, aufweisend die folgenden Schritte:
a) Zerteilen des Bambusrohres quer zu seiner Längsachse in einzelne Abschnittselemente,
b) Spalten der Abschnittselemente entlang ihrer Längsachse in Spaltelemente,
c) Lagerung der Spaltelemente in einer Flüssigkeit,
d) Zerfaserung der Spaltelemente zu einzelnen Filamenten mittels Druckbeaufschlagung, und
e) Vertwisten oder Verzwirnen mehrerer einzelner Filamente zu Endlosfasern.

Grundsätzlich bereitet es Probleme, Bambusrohfasern herzustellen, die zur Herstellung faserverstärkter Kunststoffe geeignet sind. So weist Bambusrohr in Längsrichtung wachstumsbedingte Konten auf, die für die Herstellung der Rohfasern ungeeignet sind. Es kann daher nur das zwischen den Knoten befindliche Material für die Herstellung der Rohfasern verwendet werden. Dies impliziert, dass die hergestellten Bambusrohfasern nicht länger sein können als der Abstand der Knoten eines Rohrs zueinander. Die Knoten weisen Abstände von maximal 360 mm auf. Bei den bevorzugt verwendeten Bambusarten liegen die Knotenabstände im Bereich zwischen 40 und 80 mm. Da die Abstände der Knoten zueinander variieren, bereitet es Schwierigkeiten, die Rohfasern maschinell herzustellen. Aus diesem Grunde wurden faserverstärkte Kunststoffe mit Bambusrohfasern bislang noch nicht hergestellt.

Den Anmeldern der vorliegenden Erfindung ist es erstmals gelungen, Bambusrohfasern in den genannten Längen in großer Menge kostengünstig herzustellen. Erst durch diesen Schritt ist es möglich, faserverstärkte Kunststoffe mit Bambusrohfasern der genannten Längen wirtschaftlich herzustellen.

Bei dem erfindungsgemäßen Verfahren zur Herstellung von Endlosfasern aus Bambusrohren wird zunächst ein Bambusrohr quer zu seiner Längsachse in einzelne Abschnittselemente zerteilt, in dem das Bambusrohr vor und hinter einem wachstumsbedingten Knoten in Querrichtung zerteilt wird. Die dabei entstehenden Abschnittselemente stellen das zwischen den Knoten befindliche Material des Bambusrohres dar. Diese Abschnittselemente werden in einem weiteren Verarbeitungsschritt entlang ihrer Längsachse in mehrere Spaltelemente gespalten, welche vorzugsweise die gleiche Länge wie die Abschnittselemente aufweisen, jedoch einen geringeren Durchmesser. Diese Spaltelemente werden anschließend in eine Flüssigkeit, vorzugsweise in Wasser, gelegt und dort so lange gelagert bis sie mittels Druckbeaufschlagung möglichst leicht zu einzelnen Filamenten zerfasert werden können. Die einzelnen Filamente werden anschließend zu Endlosfasern vertwistet oder verzwirnt. Dabei werden mehrere Filamente zusammen zu einer Endlosfaser vertwistet oder verzwirnt. Zur weiteren Verarbeitung der Endlosfaser kann die Endlosfaser auf einer Rolle aufgewickelt werden, wobei die hergestellte Endlosfaser eine Länge von mehreren Metern bis zu mehreren Kilometern aufweisen kann.

Aufgrund der rauen Oberfläche der durch die Anmelder erstmals hergestellten Bambusrohfasern (Filamente) eignen diese sich besonders gut für die Herstellung von Endlosfasern durch Vertwisten oder Verzwirnen.

Gemäß einer bevorzugten Ausführungsform der Erfindung kann zwischen der Lagerung der Spaltelemente in einer Flüssigkeit und der Zerfaserung der Spaltelemente und/oder zwischen der Zerfaserung der Spaltelemente und dem Vertwisten oder Verzwirnen der Filamente zu Endlosfasern ein Trocknungsschritt vorgesehen sein. Durch den zusätzlichen Trocknungsschritt wird erreicht, dass die Endlosfasern besonders feuchtigkeitsresistent sind, so dass sie keine Feuchtigkeit, insbesondere kein Wasser, aufnehmen, was für die weitere Verarbeitung der Endlosfasern, insbesondere zur Herstellung faserverstärkter Kunststoff, besonders vorteilhaft ist.

Die Druckbeaufschlagung zur Zerfaserung der Spaltelemente zu einzelnen Filamenten erfolgt vorzugsweise mittels einer Presse, wobei die Spaltelemente dabei vorzugsweise in eine Presse eingeklemmt werden und durch Aufbringung eines voreingestellten Druckes auf einfache Art und Weise zu einzelnen Filamenten zerfasert werden.

Vor dem Vertwisten oder Verzwirnen der Filamente aus Bambusrohr können gemäß einer weiteren Ausgestaltung der Erfindung die Filamente aus Bambusrohr mit anderen Naturfasern und/oder synthetischen Fasern als Bambus vermischt werden. Als Naturfasern können dabei beispielsweise Abacafasern, Sisalfasern, Hanffasern, Jutefasern, Bambusfasern oder dergleichen verwendet werden. Als synthetische Fasern können dabei beispielsweise Polypropylenfasern, Polyesterfasern, Polyamidfasern, Biopolymerfasern, Carbonfasern, Glaserfasern oder dergleichen verwendet werden. Durch die Vermischung der Bambusfilamente mit anderen Naturfasern oder synthetischen Fasern können die jeweiligen besonderen Eigenschaften der Fasern optimal genutzt werden, so dass die Endlosfasern in Abhängigkeit ihres Verwendungszweckes durch eine Vermischung der Bambusfilamente mit anderen Fasern optimal eingestellt werden können.

Weiterhin ist dabei bevorzugt vorgesehen, dass die Filamente eine Länge zwischen 5 cm und 100 cm, vorzugsweise zwischen 15 cm und 80 cm, und einen Durchmesser zwischen 0,01 mm und 2 mm, vorzugsweise zwischen 0,05 mm und 0,1 mm, aufweisen.

Grundsätzlich ist hier anzumerken, dass besonders dünne Filamente bevorzugt sind, weil sie sich, wenn sie zur Herstellung eines faserverstärkten Kunststoffes verwendet werden, später in dem faserverstärkten Kunststoff besonders gut verteilen und aufgrund ihrer relativ gesehenen großen Oberfläche eine besonders innige Verbindung mit dem Kunststoff eingehen.

Der Durchmesser der herzustellenden Endlosfaser wird je nach Anforderungen festgelegt. Er liegt bevorzugt im Bereich zwischen 0,02 mm und 50 mm, besonders bevorzugt im Bereich zwischen 0,5 und 5 mm.

Ferner betrifft die Erfindung ein Verfahren zur Herstellung eines mit Endlosfasern verstärkten Kunststoffes, aufweisend die folgenden Schritte:
I.) Aufschmelzen eines Kunststoffes in einer Verarbeitungsmaschine,
II.) Zuführung von Endlosfasern, hergestellt nach einem Verfahren gemäß einem der Ansprüche 1 - 6, zu dem aufgeschmolzenen Kunststoff, und
III.) Ummanteln der Endlosfasern mit dem aufgeschmolzenen Kunststoff.

Erfindungsgemäß wird zunächst ein Kunststoff in einer Verarbeitungsmaschine, welche Wärme bzw. Reibung zur Erzeugung der benötigten Wärme zum Aufschmelzen des Kunststoffes erzeugt, in einen fließfähigen Zustand gebracht. Dem aufgeschmolzenen Kunststoff werden anschließend Endlosfasern, hergestellt aus Bambusfasern nach dem zuvor beschriebenen Verfahren, zugeführt. Die Zuführung der Endlosfasern zu dem aufgeschmolzenen Kunststoff kann beispielsweise mittels Extrusion, Pultrusion oder einem Tauchverfahren erfolgen. Die Endlosfasern werden dabei dem aufgeschmolzenen Kunststoff derart zugeführt, dass die Endlosfasern von dem Kunststoff ummantelt werden bzw. in dem Kunststoff eingebettet werden.

Die erfindungsgemäße Verwendung von Naturfasern als Faserkomponente in einem faserverstärkten Kunststoff weist eine Reihe von signifikanten Vorteilen auf: So lassen sich solchermaßen ausgebildete Kunststoffe im Gegensatz zu glasfaserverstärkten Kunststoffen leicht schreddern, und können dann eingeschmolzen und wiederverwertet werden. Ebenso gut können sie auch thermisch wiederverwertet, d.h. verbrannt, werden. Besonders vorteilhaft ist dabei die Verwendung von Bambusfasern als Naturfasern.

Im Gegensatz zu mit Flachs, Hanf oder Sisal versetzten Kunststoffen weisen bambusfaserverstärkte Kunststoffe eine weitaus höhere Reißfestigkeit auf, da Bambusfasern einen sehr viel höheren Elastizitätsmodul (E-Modul) aufweisen als andere Naturfasern. Untersuchungen der Erfinder haben gezeigt, dass Bambusrohfasern eine mittlere Zugfestigkeit von 87,5 kN mm⁻² , eine mittlere Reißdehnung von 10,5 % sowie ein mittleres Zug-E-Modul von 3420 kN mm⁻² aufweisen. Weiter haben Versuche der Erfinder gezeigt, dass ein Werkstück aus einem erfindungsgemäßen Kunststoff, bestehend aus Polypropylen als Matrix- und Bambusfasern als Faserkomponente, Zug- und Druckeigenschaften aufweist, die dem von glasfaserverstärkten Kunststoffen mit 20 Gew.-% Glasfaseranteil entsprechen. Bambusfasern sind - trotz ihrer grundsätzlichen Brennbarkeit - im Gegensatz zu vielen anderen Naturfasern relativ schwer entflammbar, was bereits bei einem unveredelten erfindungsgemäßen Kunststoff zu einer erschwerten Entflammbarkeit führt. Gleichwohl lassen sich die erfindungsgemäßen Kunststoffe zu Entsorgungszwecken verbrennen. Hinzu kommt, dass Bambusfasern im getrockneten Zustand - wiederum im Gegensatz zu vielen anderen Naturfasern - praktisch keine Feuchtigkeitsaufnahme aufweisen. Bambusfasern weisen ferner im Gegensatz zu Kohle-, Glas-, Stahl- oder Aramidfasern durch ihre raue Struktur eine grobe Oberfläche auf. Dies führt zu einer besonders innigen Verbindung mit der Kunststoffmatrix.

Bambusfasern sind zudem ein nachwachsender Rohstoff, der im Vergleich zu den herkömmlicherweise verwendeten Fasern, aber auch im Vergleich zu anderen Naturfasern, sehr kostengünstig ist. Überdies haben Bambusfasern eine antibakterielle Wirkung, was ihre Verwendung in faserverstärkten Kunststoffen für den medizinischen Bereich denkbar macht.

Vorteilhafterweise kann das Aufschmelzen des Kunststoffes, die Zuführung der Endlosfasern zu dem aufgeschmolzenen Kunststoff und/oder das Ummanteln der Endlosfaser mit dem aufgeschmolzenen Kunststoff mittels eines Extruders als Verarbeitungsmaschine erfolgen.

Bevorzugt ist dabei vorgesehen, dass die Endlosfaser der Verabeitungsmaschine, insbesondere dem Extruder, seitlich zugeführt wird.

Hierbei wird ein sogenannter Extruder mit seitlicher Zuführung verwendet. Dabei wird an einem herkömmlichen Extruder mindestens ein Seitenanschluss (Seitenfüttereinrichtung) angeordnet, über welchen zusätzliches Material in den Extrusionsprozess eingespeist werden kann.

Während das Kunststoffrohmaterial, das z.B. in Form eines Granulats vorliegt, der Extruderschnecke über einen Dosierungstrichter zugeführt und in der Schnecke erhitzt, geschmolzen und geknetet wird, wird die Endlosfaser dem Extruder bei der Seitenextrusion erst kurz vor der Extruderdüse, nachdem der Kunststoff die Extruderschnecke passiert hat, von der Seite her zugeführt. Auf diese Weise wird - im Unterschied zu der Verwendung von Kurzschnittfasern, die ebenfalls über einen Dosierungstrichter zugeführt werden müssen, was aufgrund der rauen Oberfläche der Fasern häufig zu Verklumpungen und dgl. führt - eine sehr genaue Dosierung zwischen Kunststoffrohmaterial und Endlosfaser ermöglicht. Hinzu kommt, dass die verwendeten Naturfasern - ebenfalls im Unterschied zu der Verwendung von Kurzschnittfasern, die auf dem langen Weg durch die Extruderschnecke mechanisch sehr stark belastet und z.T. zerrissen werden - gar nicht oder nur kaum belastet werden, da sie überhaupt nicht mit der Extruderschnecke in Berührung kommen.

Als Kunststoffe für die Matrixkomponente des faserverstärkten Kunststoffes können grundsätzlich alle Thermoplaste, Duroplaste oder Elastomere zum Einsatz kommen. So können z.B. Polyolefine, Polybutylene, Polyurethane, Acrylharze, Polycarbonate, Thermoplastische Elastomere, Polyester, Polyacetale, Polyamide, Polethylene, Polypropylene, PVC, ABS und Compounds auf Basis der oben aufgeführte Materialien verwendet werden.

Dem Kunststoff kann vor der Zuführung der Endlosfasern ein Haftvermittler zugefügt werden. Ebenso kann aber auch die Endlosfaser vor der Zuführung zu dem aufgeschmolzenen Kunststoff mit einem Haftvermittler versehen werden.

Dieser trägt zu einer besonders innigen Verbindung zwischen den Endlosfasern und dem Kunststoff, d.h. der Matrixkomponente, bei. Geeignete Haftvermittler sind z. B. MAE-PP, HC5, Polybond 3200, oder MHA.

Ebenso können dem Kunststoff Additive zur Erhöhung der Schlagfestigkeit oder auch Entflammungshemmer zugefügt werden. Bei ersteren kann es sich z.B. um EPDM handeln, das in einem Anteil von 1 - 15 Gew.-% hinzugefügt wird und die Schlagfestigkeit wesentlich erhöht. Letztere können alle handelsüblichen Entflammungshemmer sein. Grundsätzlich wird jedoch darauf hingewiesen, dass die Bambusfaser selbst bereits schwer entflammbar ist und diese Eigenschaft auf den erfindungsgemäßen Verbundkunststoff übertragen kann.

Der mittels des erfindungsgemäßen Verfahrens hergestellte faserverstärkte Kunststoff weist gemäß einer bevorzugten Ausführungsform einen Anteil an Endlosfasern zwischen 5 Gew.-% und 95 Gew.-%, vorzugsweise zwischen 20 Gew.-% und 80 Gew.-%, auf.

Die Endlosfasern können gemäß einer weiteren Ausführungsform der Erfindung vor der Zuführung zu dem aufgeschmolzenen Kunststoff mit einer Beschichtung aus einem Kunststoffmaterial versehen werden. Die Beschichtung der Endlosfasern erfolgt dabei bevorzugt ebenfalls in einem Extruder, bevorzugt einem Extruder mit seitlicher Zuführung. Dabei wird die Endlosfaser in den Extruder eingeführt und zusammen mit dem Kunststoff extrudiert. Bei der Extrusion bildet sich dann eine Kunststoffmatrix, die die gesamte Faser umschließt.

Alternativ kann die Beschichtung der aus Grundfasern bestehenden Endlosfasern auch mit einem Tauch- oder einem Spritzverfahren erfolgen.

Als Kunststoffmaterial kommt dabei bevorzugt derselbe Kunststoff zum Einsatz, der auch für die Matrixkomponente verwendet wird.

Die Dicke der Beschichtung soll dabei bevorzugt zwischen 10 µm und 10 mm betragen; je nach Stärke der Endlosfaser.

Die Erfinder haben überraschend festgestellt, dass die Verwendung der erfindungsgemäß vorbeschichteten Endlosfasern gegenüber unbeschichteten Endlosfasern bzw. gegenüber Kurzsschnittfasern eine Reihe von Vorteilen aufweist.
■ So lassen sich die beschichteten Endlosfasern weitaus besser Handhaben als unbeschichtete Endlosfasern oder Faserkurzschnitt, da sie durch die Beschichtung eine glattere und dichte Oberfläche aufweisen. Die beschichteten Endlosfasern lassen sich also sehr gut auf Rollen oder Spindeln aufziehen, ohne zu verketten.
■ Überdies lassen sie sich einfacher und widerstandsfreier fördern als unbeschichtete Fasern, insbesondere z.B. einem Extruder zuführen.
■ Durch die Beschichtung ist die Endlosfaser vor Feuchtigkeit geschützt, d.h. die Endlosfasern können besser gelagert werden, insbesondere auf der Witterung ausgesetzten Lagerplätzen bzw. Transportladeflächen, und transportiert werden.
■ Hinzu kommt, dass die Beschichtung die spätere Compoundierung mit dem Kunststoffrohmaterial (Matrixkomponente) im Extruder wesentlich beschleunigt und erleichtert, insbesondere dann, wenn das Kunststoffrohmaterial und der für die Beschichtung verwendete Kunststoff ähnliche Eigenschaften (insbesondere Schmelzeigenschaften) aufweisen. Idealerweise sind die jeweiligen Materialien identisch.
■ Weiterhin kann durch geeignete Auswahl bzw. Dotierung des Beschichtungskunststoffs eine statische Aufladung der Fasern verhindert und so die Verarbeitbarkeit wesentlich verbessert werden.

Durch die erfindungsgemäße Beschichtung der Endlosfaser wird trotz der Tatsache, dass bei der Seitenextrusion die Endlosfaser nur sehr kurz mit dem Kunststoffrohmaterial in Berührung kommt, eine gute Compoundierung ermöglich.

Hinzu kommt, dass die erfindungsgemäße Beschichtung der Endlosfaser das Handling und Dosieren der Endlosfaser bei der Seitenextrusion wesentlich erleichtert, da sich die beschichtete Endlosfaser wesentlich leichter und störungsfreier auf- und abspulen sowie fördern lässt.

Als Kunststoffe für die Beschichtung können grundsätzlich alle Thermoplaste, Duroplaste oder Elastomere zum Einsatz kommen. So können z.B. Polyolefine, Polybutylene, Polyurethane, Acrylharze, Polycarbonate, Thermoplastische Elastomere, Polyester, Polyacetale, Polyamide, Polethylene, Polypropylene, PVC, ABS und Compounds auf Basis der oben aufgeführten Materialien verwendet werden.

Besonders bevorzugt ist gemäß einer weiteren Ausführungsform der Erfindung vorgesehen, dass im Anschluss an das Ummanteln der Endlosfasern mit dem aufgeschmolzenen Kunststoff bzw. im Anschluss an das Einbetten der Endlosfasern in dem aufgeschmolzenen Kunststoff ein Granulat, Pellets, ein Profil, ein Rohr, eine Platte oder eine Folie hergestellt wird.

Dieser Schritt kann sich im Falle eines Extrusionsverfahrens zur Herstellung des faserverstärkten Kunststoffes unmittelbar an die Extrusion anschließen. Ebenso kann jedoch auch ein bei der Extrusion hergestelltes Granulat später - ggf. ebenfalls durch Extrusion - zu den genannten Bauteilen weiterverarbeitet werden.

Die hierfür weiter erforderlichen Schritte sind dem Fachmann aus dem Stand der Technik wohlbekannt.

Um ein Granulat oder aber Pellets herzustellen, wird das Extrudat z.B. zu gleichmäßigen, runden Strängen ausgeformt, die in einem Wasserbad heruntergekühlt und anschließend, vorzugsweise in 1 mm bis 50 mm lange Stücke, geschnitten werden (Stranggranulierung). Ebenso können Granulat oder Pellets auch mit dem Verfahren der Unterwassergranulierung hergestellt werden.

Zur Herstellung von Rohren und Profilen ist nach der Extrusion ein anschließender Kalibrationsschritt erforderlich, der ggf. im Vakuum und/oder unter Wasserkühlung durchgeführt wird. Platten werden durch Plattenextrusion hergestellt.

Das erhaltende Granulat bzw. die erhaltenden Pellets können einem Spritzgußverfahren unterzogen werden.

Auf diese Weise lassen sich komplexe Werkstücke und Bauteile herstellen, die allein auf dem Weg der Extrudierung nicht herstellbar sind. In Frage kommen hier insbesondere Thermoplast-Spritzgussverfahren und In-Mold-Verfahren, aber auch alle anderen dem Fachmann geläufigen Spritzgussverfahren aus dem Stand der Technik.

Bevorzugt ist überdies ein Bauteil aus einem faserverstärkten Kunststoff vorgesehen, das mit einem erfindungsgemäßen Verfahren zur Herstellung eines mit Endlosfasern verstärkten Kunststoffes herstellbar ist.

Ebenso ist ein Granulat oder Pellets aus einem faserverstärkten Kunststoff vorgesehen, das bzw. die mit einem der erwähnten Verfahren herstellbar sind.

Weiterhin ist ein faserverstärkter Kunststoff vorgesehen, herstellbar durch eines der vorgenannten Verfahren, enthaltend Endlosfasern aus Bambusfasern hergestellt durch das erfindungsgemäße Verfahren zur Herstellung von Endlosfasern aus einem Bambusrohr.

Ebenso ist erfindungsgemäß die Verwendung eines wie oben beschriebenen faserverstärkten Kunststoffs zur Herstellung von Karosserie- oder Verkleidungsteilen im Automobil-, Flugzeug-und/oder Schiffbau. In Automobilbau ist dabei insbesondere an Türverkleidungen, Armaturenbretter, und Stoßfänger gedacht.

Ebenso ist erfindungsgemäß die Verwendung eines wie oben beschriebenen faserverstärkten Kunststoffs zur Herstellung von Rotorblättern, z.B. für Windkraftanlagen, vorgesehen. Gerade für diesen Einsatzbereich empfiehlt sich der erfindungsgemäße Kunststoff aufgrund seiner Wiederverwertbarkeit.

Weiterhin ist erfindungsgemäß die Verwendung eines wie oben beschriebenen faserverstärkten Kunststoffs zur Herstellung von Rohren für den Hoch- und den Tiefbau vorgesehen. So müssen Kunststoffrohre im Tiefbau häufig in einer gewissen Mindesttiefe verlegt werden, um vor Frost geschützt zu sein. Ein weiterer Grund ist, dass die maximalen Punktbelastungen nicht überschritten werden dürfen. Rohre aus einem erfindungsgemäßen faserverstärkten Kunststoff weisen einerseits eine größere Frostsicherheit auf und andererseits eine höhere Belastbarkeit gegenüber Druck und Zug als konventionelle Kunststoffrohre, und können daher in geringerer Tiefe verlegt werden. Auf diese Weise lassen sich Kosten für Tiefbauarbeiten erheblich reduzieren.

Weiterhin erfindungsgemäß ist die Verwendung eines wie oben beschriebenen faserverstärkten Kunststoffs in Fassadenteilen für den Hochbau, Fenster- und Türrahmen, Kunststoffprofilen, Werkzeugen und Arbeitsgeraten und/oder Kunststoffgehäusen vorgesehen.

Grundsätzlich kommen alle Anwendungsbereiche in Frage, die nach einem hochbelastbaren, wieder verwertbaren Werkstoff mit geringem spezifischem Gewicht verlangen.

### Zeichnungen und Beispiele

Die vorliegende Erfindung wird durch die im Folgenden gezeigten und diskutierten Figuren und Beispiele genauer erläutert. Dabei ist zu beachten, dass die Figuren und Beispiele nur beschreibenden Charakter haben und nicht dazu gedacht sind, die Erfindung in irgendeiner Form einzuschränken.

### Beispiel 1: Herstellung eines Kunststoffbauteils aus Polyamid mit 20 Gew.-% Bambusfasern

Bambusfilamente mit einer mittleren Länge von 40 +/-10 mm werden zu einer Endlosfaser mit einem Durchmesser von 5 mm vertwistet. In einen Extruder wird über einen Dosierungstrichter ein Matrixkunststoff, ein Polyamid PA6-Granulat mit einer mittleren Korngröße von 0.8 +/- 0.20 mm, eingeführt, welcher anschließend mittels Zufuhr von Wärme und die beim Durchlaufen der Extruderschnecke entstehende Reibung geschmolzen und geknetet wird. Die Endlosfaser wird durch eine Seitenfüttereinrichtung, welche in Förderrichtung des Kunststoffes hinter der Extruderschnecke angeordnet ist, in den Extruder eingespeist. Der Gewichtsanteil der Endlosfaser an der gesamten im Extruder verarbeiteten Masse liegt bei 20 +/- 5 Gew.-%.

Um die Haftung zwischen beschichteter Faser und Matrixkunststoff zu verbessern, kann die Faser ggf. zuvor mit einem Haftvermittler behandelt werden.

Endlosfaser und Matrixkunststoff werden im Extruder miteinander vermengt und dann durch eine Düse gepresst und zu gleichmäßigen, runden Strängen ausgeformt, die in einem Wasserbad heruntergekühlt und anschließend geschnitten werden.

Die auf diese Weise erhaltenen Pellets werden in einem Spritzgußverfahren zu Karosserieteilen für den Automobilbau weiterverarbeitet. Ihre mechanischen Eigenschaften (E-Modul, spezifisches Gewicht, Formbarkeit, Oberflächenrauhigkeit) entsprechen denen von glasfaserverstärkten Kunststoff PA 6 GF20 oder PA 66 GF20 oder übertreffen diese.

### Beispiel 2: Herstellung eines Kunststoffbauteils aus einem anderen Kunststoff mit 20 Gew.-% Bambusfasern

In Abweichung von Beispiel 1 kann anstelle von PA 6 auch PA 66, PBT (Polybutylenterephthalat), PC (Polycarbonat), und/oder PP (Polypropylen) oder ein anderer thermoplastischer Kunststoff aus dem Stand der Technik verwendet werden. Der Fachmann kennt die spezifischen Vorteile dieser Kunststoffe und ist daher unter Ausnutzung der hier vorgestellten technischen Lehre in der Lage, entsprechend den Anwendungsbereichen des herzustellenden faserverstärkten Kunststoffs ohne eigenes Zutun erfinderischer Tätigkeit den geeigneten Matrixkunststoff auszuwählen.

### Beispiel 3: Herstellung eines Kunststoffbauteils aus PA 6 mit einem geänderten Anteil an Bambusfasern

In Abweichung von Beispiel 1 kann der Anteil an Bambusfasern variiert werden. Soll insbesondere das E-Modul des herzustellenden faserverstärkten Kunststoffs höher sein, kann ein höherer Anteil an Bambusfasern (bis zu 50 Gew.%) gewählt werden. Sind die Anforderungen an das E-Modul geringer, kann ein geringerer Anteil an Bambusfasern (z.B. 5 Gew.%) gewählt werden.

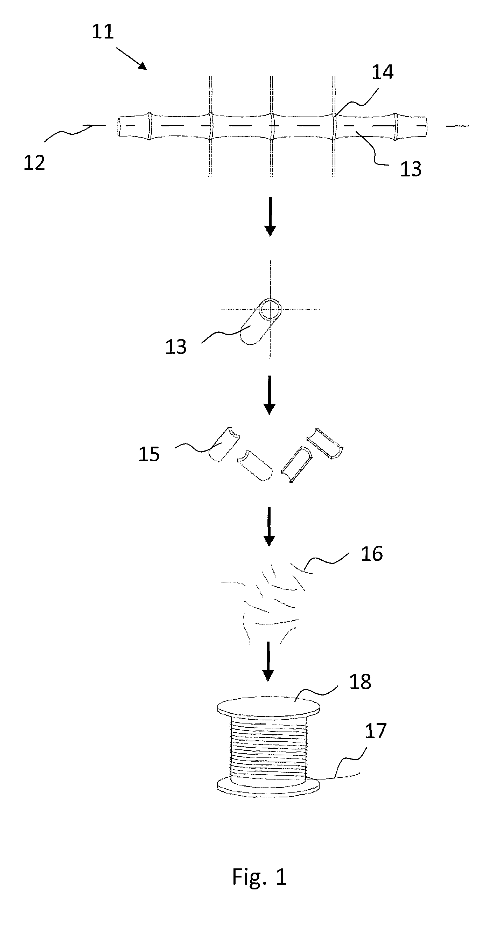

Fig. 1 zeigt schematisch das erfindungsgemäße Verfahren zur Herstellung von Endlosfasern aus einem Bambusrohr 11. Das Bambusrohr 11 wird zunächst quer zu seiner Längsachse 12 in einzelne Abschnittselemente 13 zerteilt, in dem das Bambusrohr 11 vor und hinter einem wachstumsbedingten Knoten 14 in Querrichtung zerteilt wird. Die Abschnittselemente 13 werden anschließend entlang ihrer Längsachse in Spaltelemente 15 gespalten, wobei ein Abschnittselement 13 in mehrere Spaltelemente 15 aufgespalten wird. Die Spaltelemente 15 werden für eine bestimmte Zeit in Wasser gelegt und anschließend mittels Druckbeaufschlagung zu einzelnen Filamenten 16 zerfasert. Mehrere dieser Filamente 16 werden anschließend zu Endlosfasern 17 vertwistet oder verzwirnt, welche beispielsweise für die weitere Verarbeitung auf einer Rolle 18 aufgewickelt werden können. Zwischen der Lagerung der Spaltelemente 15 in der Flüssigkeit und der Zerfaserung der Spaltelemente 15 und/oder zwischen der Zerfaserung der Spaltelemente 15 und dem Vertwisten oder Verzwirnen der Filamente 16 zu Endlosfasern 17 kann ferner ein Trocknungsschritt vorgesehen sein.

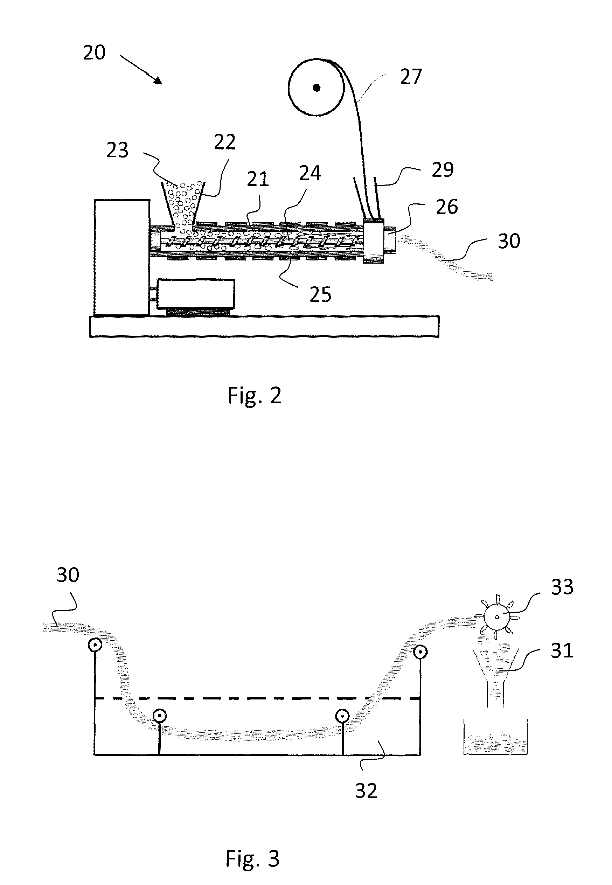

Fig. 2 zeigt einen Extruder 20 zur Compoundierung einer Endlosfaser 27 mit einem Matrixkunststoff, aufweisend einen Zylinder 21, einen Dosierungstrichter 22 für einen in granulierter Form vorliegenden Matrixkunststoff 23, eine Extruderschnecke 24, Temperiereinrichtungen 25, eine Extrusionsdüse 26, sowie eine Antriebseinrichtung 28. Weiterhin weist der Extruder 20 eine Seitenfüttereinrichtung 29 auf.

Während der Matrixkunststoff 23 der Extruderschnecke 24 über den Dosierungstrichter 22 zugeführt und im Bereich der Schnecke 24 erhitzt, geschmolzen und geknetet wird, wird die Endlosfaser 27 dem Extruder 20 erst kurz vor der Extrusionsdüse 26 in Förderrichtung gesehen hinter der Extruderschnecke 24 von der Seite her über die Seitenfüttereinrichtung 29 zugeführt. Auf diese Weise wird - im Unterschied zu der Verwendung von Kurzschnittfasern, die ebenfalls über einen Dosierungstrichter zugeführt werden müssen, was aufgrund der rauen Oberfläche der Fasern häufig zu Verklumpungen und dgl. führt - eine sehr genaue Dosierung zwischen Matrixkunststoff 23 und Endlosfaser 27 ermöglicht. Hinzu kommt, dass die verwendeten Naturfasern - ebenfalls im Unterschied zu der Verwendung von Kurzschnittfasern, die auf dem langen Weg durch die Extruderschnecke mechanisch sehr stark belastet und z.T. zerrissen werden - gar nicht oder nur sehr gering belastet werden, da sie die Extruderschnecke 24 gar nicht erst passieren müssen.

Um ein Granulat 31 oder Pellets herzustellen, wird das Extrudat 30 anschließend z.B. zu gleichmäßigen, runden Strängen ausgeformt, wie in Fig. 3 gezeigt, die in einem Wasserbad 32 heruntergekühlt und anschließend mittels eines Schneidwerks 33 geschnitten werden (Stranggranulierung). Ebenso können Granulat oder Pellets auch mit dem Verfahren der Unterwassergranulierung hergestellt werden. Zur Herstellung von Rohren und Profilen ist nach der Extrusion ein anschließender Kalibrationsschritt erforderlich, der ggf. im Vakuum und/oder unter Wasserkühlung durchgeführt wird. Platten werden durch Plattenextrusion hergestellt.

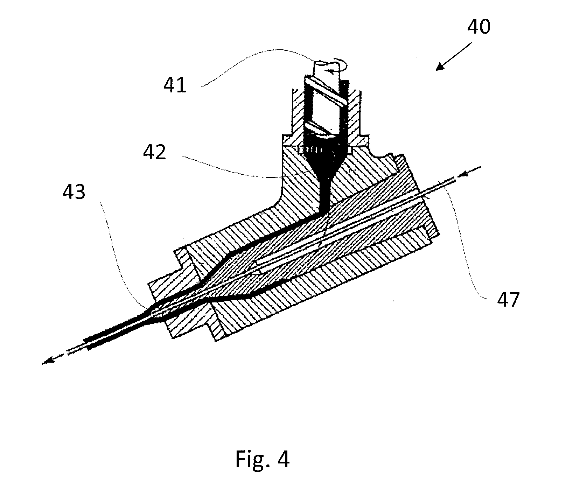

Fig. 4 zeigt eine Beschichtungsvorrichtung 40 zur erfindungsgemäßen Beschichtung einer Endlosfaser 47. Dabei wird über eine Schnecke 41 ein geschmolzener Kunststoff 42 in die Vorrichtung 40 eingebracht und über eine Beschichtungsdüse 43 auf die Endlosfaser 47 aufgebracht.

## Patentansprüche

1. Verfahren zur Herstellung von Endlosfasern aus einem Bambusrohr, aufweisend die folgenden Schritte:
a) Zerteilen des Bambusrohres quer zu seiner Längsachse in einzelne Abschnittselemente,
b) Spalten der Abschnittselemente entlang ihrer Längsachse in Spaltelemente,
c) Lagerung der Spaltelemente in einer Flüssigkeit,
d) Zerfaserung der Spaltelemente zu einzelnen Filamenten mittels Druckbeaufschlagung, und
e) Vertwisten oder Verzwirnen mehrerer einzelner Filamente zu Endlosfasern.

2. Verfahren gemäß Anspruch 1, **dadurch gekennzeichnet, dass** zwischen Schritt c) und d) ein Trocknungsschritt der Spaltelemente und/oder zwischen Schritt d) und e) ein Trocknungsschritt der Filamente durchgeführt wird.

3. Verfahren gemäß Anspruch 1 und/oder 2, **dadurch gekennzeichnet, dass** die Druckbeaufschlagung in Schritt d) mittels einer Presse erfolgt.

4. Verfahren gemäß einem der vorherigen Ansprüche, **dadurch gekennzeichnet, dass** in Schritt e) die Filamente vor dem Vertwisten oder Verzwirnen mit anderen Naturfasern als Bambus und/oder mit synthetischen Fasern vermischt werden.

5. Verfahren gemäß einem der vorherigen Ansprüche, **dadurch gekennzeichnet, dass** die Filamente eine Länge zwischen 5 cm und 100 cm, vorzugsweise zwischen 15 cm und 80 cm, und einen Durchmesser zwischen 0,01 mm und 2 mm, vorzugsweise zwischen 0,05 mm und 0,1 mm, aufweisen.

6. Verfahren gemäß einem der vorherigen Ansprüche, **dadurch gekennzeichnet, dass** die Endlosfasern einen Durchmesser zwischen 0,02 mm und 50 mm, vorzugsweise zwischen 0,5 mm und 5 mm, aufweisen.

7. Verfahren zur Herstellung eines mit Endlosfasern verstärkten Kunststoffes, aufweisend die folgenden Schritte:
IV.) Aufschmelzen eines Kunststoffes in einer Verarbeitungsmaschine,
V.) Zuführung von Endlosfasern, hergestellt nach einem Verfahren gemäß einem der Ansprüche 1 - 6, zu dem aufgeschmolzenen Kunststoff, und
VI.)Ummanteln der Endlosfasern mit dem aufgeschmolzenen Kunststoff.

8. Verfahren gemäß Anspruch 7, **dadurch gekennzeichnet, dass** Schritt I.) und Schritt II.) und/oder Schritt III.) mittels eines Extruders erfolgt.

9. Verfahren gemäß Anspruch 7 und/oder 8, **dadurch gekennzeichnet, dass** in Schritt II.) die Endlosfaser dem aufgeschmolzenen Kunststoff innerhalb der Verarbeitungsmaschine zugeführt wird, wobei die Endlosfaser der Verarbeitungsmaschine seitlich zugeführt wird.

10. Verfahren gemäß einem der vorherigen Ansprüche 7 - 9, **dadurch gekennzeichnet, dass** der mit Endlosfasern verstärkte Kunststoff einen Anteil an Endlosfasern zwischen 5 Gew.-% und 95 Gew.-%, vorzugsweise zwischen 20 Gew.-% und 80 Gew.-%, aufweist.

11. Verfahren gemäß einem der vorherigen Ansprüche 7-10, **dadurch gekennzeichnet, dass** im Anschluss an Schritt III.) aus den mit Kunststoff ummantelten Endlosfasern, ein Granulat, Pellets, ein Profil, ein Rohr, eine Platte oder eine Folie hergestellt wird.

12. Bauteil aus einem faserverstärkten Kunststoff, **dadurch gekennzeichnet, dass** das Bauteil mit einem Verfahren gemäß einem der Ansprüche 7-11 hergestellt ist.

13. Granulat oder Pellets aus einem faserverstärkten Kunststoff, **dadurch gekennzeichnet, dass** das Granulat oder die Pellets mit einem Verfahren gemäß einem der Ansprüche 7
- 11 hergestellt ist.

14. Faserverstärkter Kunststoff hergestellt durch ein Verfahren gemäß einem der Ansprüche 7-11, enthaltend Endlosfasern aus Bambusfasern hergestellt durch ein Verfahren gemäß einem der Ansprüche 1 - 6.

15. Verwendung eines faserverstärkten Kunststoffs gemäß Anspruch 13 oder Anspruch 14, zur Herstellung von
a) Karosserie- oder Verkleidungsteilen im Automobil-, Flugzeug- und/oder Schiffbau;
b) Rotorblättern, z.B. für Windkraftanlagen;
c) Rohren für den Hoch- und den Tiefbau;
d) Fassadenteilen für den Hochbau;
e) Fenster- und Türrahmen;
f) Kunststoffprofilen;
g) Werkzeugen und Arbeitsgeräten; und/oder
h) Kunststoffgehäusen.
